# EUROPEAN PATENT SPECIFICATION

(11) **EP 2 182 603 B1**
(45) Date of publication and mention of the grant of the patent: **27.01.2016**
(21) Application number: 08784064.1
(22) Date of filing: 21.08.2008
(51) Int. Cl.: H02H 3/08, H02H 3/20

(54) **INTELLIGENT ELECTRICAL ENERGY MANAGEMENT SYSTEM DEVICE**
EINRICHTUNG EINES INTELLIGENTEN ELEKTRISCHEN ENERGIEVERWALTUNGSSYSTEMS
DISPOSITIF À SYSTÈME INTELLIGENT DE GESTION DE L'ÉNERGIE ÉLECTRIQUE

(30) Priority: 22.08.2007 CN 200710076539
(43) Date of publication of application: 05.05.2010
(73) Proprietor: Shenzhen Jax Intelligent Electric Co., Ltd., Shenzhen, Guangdong 518102 (CN)
(72) Inventor: DONG, Youyun, Xixiang Town, Baoan District Shenzhen, Guangdong 518000 (CN)
(74) Representative: Hellmich, Wolfgang
(86) International application number: PCT/CN2008/072073
(87) International publication number: WO 2009/026832

(56) References cited:
- EP-A1- 1 718 128
- CN-A- 101 136 546
- CN-Y- 2 588 634
- US-A- 3 611 038
- US-A- 3 753 070
- US-A- 5 835 324
- US-A1- 2001 000 355
- US-A1- 2003 107 855
- US-A1- 2003 174 453
- US-A1- 2003 202 305
- US-A1- 2006 052 958
- US-B1- 6 340 924
- US-B2- 7 072 779

## Description

The present invention involves a control device, particularly involves an intelligent electrical energy management system device for power consumption management of home, office, and industry. More specifically, this invention relates to an intelligent electrical energy management system device according to the preamble part of clam 1. Such an intelligent electrical energy management system device is disclosed in US 2006/0052958 A1.

Power consumption of daily life adopts single-phase rated voltage of 120 V or 220/240 V in mains frequency, and power consumption of industry adopts AC three-phase rated voltage of 380/400V in mains frequency. The control device of the first generation low voltage electrical switch is composed of a switch box and a porcelain fuse box, which can realize turning on/off the power supply circuit manually, and can realize turning off the power supply circuit automatically when the current is over the rated value of the fuse. Currently, this technology is basically obsoleted. The control device of the second generation low voltage electrical switch is composed of a leakage protector and an air switch. The leakage protector is a switch device which can avoid fire failure caused by electric leakage and can avoid the accident of electrocution; when the leakage current is over a curtain value, the leakage protector can automatically turn off the power switch in a certain time. The air switch is also named breaker, which is used to switch on, break, and carry the rated working current, and can protect the circuit and the electrical equipment in the situation of overload, short circuit, or under voltage. They can realize the function of leakage protection, overcurrent protection, short circuit protection, under voltage protection, etc. But, the leakage protector operates via mechanical linkage, which has low sensitivity and responses slowly. The leakage protector needs to be switched on manually when it is to be electrified; although it can automatically switch off the circuit for leakage protection, the response speed is slow. Moreover, it has no automatic detection function to judge whether the leakage protection function is good or not, so, it needs to be detected manually. The disadvantage of air switch is that the rated current is fixed and too big, which is more than the maximum working current of the electrical equipment used in home and office, so it can not do overcurrent protection indeed. Furthermore, the air switch also operates via mechanical linkage, which has low sensitivity and responses slowly. Especially during overcurrent protection, the heat generated from the contact point makes the metal sheet to become deformed, or magnetic force is generated via electromagnetic induction, so that the mechanical linkage device is pushed to switch off the circuit; during that time, the response speed of mechanical action is slow to be easy to damage the electrical equipment; moreover, the rated value is too big, so, when it is a low current equipment to overload, the circuit is easy to be hot and the current still do not get to the rated value of the air switch, which will cause an accident for the air switch can not act. In the conventional art, the control device of low voltage electrical switch has no overvoltage protection, no under voltage protection, and no timing control; when power failure or unnormal situation occurs, it has no relevant prompt and display, and also can not guide the user to use and operate it correctly.

In the above mentioned conventional art, the control device of a low voltage electrical switch adopts a mechanical linkage method to switch off the circuit for protection, which has the disadvantages of a single function, requiring manual operation, and being unable to operate automatically.

US 2006/0052958 A1 discloses a power management integrated circuit which includes a power supply circuitry, which may interface to at least one phase of a power system and provide operating voltage(s) such as DC voltage to the intelligent electronic device.

The power system that includes power lines, such as the illustrated three phase power lines, are interfaced through interface circuitry included in the intelligent electronic device. The intelligent electronic device is applicable to current transformers which are used to monitor the current flowing in the power lines. The current transformers reduce the signal level to a point compatible with interface circuitry. The interface circuitry may scale the voltages and currents of the signals to 5V or less. The signals enter an analog front end which may incorporate programmable gain amplifiers on each channel which are configurable by a central processing unit.

The intelligent electronic device includes further a memory, a real time clock, a display module and a protocol engine. The protocol engine may also receive and transmit Fieldbus and/or TCP/IP packets through the ethernet transceiver. Transmission of TCP/IP pockets over RS-485 is also possible. The ethernet transceiver is a communication interface to devices external to the power management integrated circuit. The external communication with the ethernet transceiver is via an ethernet physical layer transceiver included in the intelligent electronic device.

In case a current on a phase of the power system exceeds a preset I²T threshold calculated by the central processing unit, the central processing unit may trigger an output via I/O circuitry. The output may trip a breaker. Tripping the breaker may remove the load from the power system that caused the overcurrent condition.

The intelligent electronic device may also incorporate digital sensors. A plurality of current digital sensors and voltage digital sensors may be coupled with the power lines.

US 2001/0000355 A1 describes a circuit breaker with a set of contacts for making and breaking an electrical connection between an electrical load and an electrical power supply and a trip unit. Power passes along power lines to load. Circuit breaker contacts are normally in the closed position so that power can pass to load. Voltage sensor and current sensor provide analog signals indicative of voltage and current measurements. The analog signals are presented to an analog / digital converter, which converts these analog signals to digital signals. The digital signals are transferred to a microcontroller, which is a microprocessor or signal processor. The trip unit further includes flash memory, which includes sector erasable flash memory, which communicates with the microcontroller over a control bus.

US 3,753,070 describes a protective circuit for electric motors against thermal overload. For connection of live main current lines there are provided two groups of terminals, between which heating resistors are arranged. Instantaneous motor disconnecting elements are also connected in the main supply lines, and are indicated as relay coils whose armatures act conjointly on a switch.

In heat transfer contact with the heating resistors, there are arranged temperature-sensing resistors. The temperature-sensing resistors supply the signal voltage for the cut-off control device. The current supply for the cut-off control device is provided from a power pack which is supplied from the main supply lines or through a neutral conductor terminal.

US 5,835,324 discloses an electronic fuse box which comprises an input device or keypad, a central processing unit (CPU), a power switch assembly and a metering assembly. Further, a power source is interconnected with the electronic fuse box at the power switch assembly including switches. The switches are transistors. Alternatively, the switches may include certain varieties of diodes, rectifiers, SCR diodes, bipolar junction transistors or such other active circuit components. Also, a plurality of electrical components are electrically connected to the electronic fuse box at the connection means. At the initiation of the external circuit protection procedure a visual or auditory alarm may be actuated.

US 2003/107855 A1 discloses a power source protecting device capable of preventing overcurrent, leakage current and surge current at the same time.

US 3,611,038 discloses a protection circuit with a differential transformer connected in phase opposition. Normally no signal is generated in a sense winding. Any leakage unbalances the transformer to generate a signal in the sense winding which is rectified to drive a relay circuit to interrupt the line power to the lamp circuit.

One line being the "common" and the other one line being the "hot" line. Both lines pass through a differential transformer because it responds to current differences or unbalance between the current phases in lines to produce an output in the tertiary winding of the differential transformer. An unbalance is created when there is a change of current in any one lines due to leakage or overload. This unbalance results in the coupling of a current to winding producing an AC signal therein which, when applied across oppositely poled diodes, applies pulses to the input of integrated circuit. The normal signal level, including trip level is less than the breakover level of diodes; therefore, the signal is squared only on excessively high-level signals (much higher than trip levels), and is used simply as protective means. Control is adjusted to set the level of the output of circuit at which an output signal will be delivered at output to diode rectifier circuit.

US 6,340,924 provides a repeatedly usable high-operating-speed circuit protection device. The circuit protection device comprises a reed member set having a first and second reed member, and a permanent magnet. The magnetomotive force created by the permanent magnet pulls the first and second reed members together, if no current flows through the reed members. When the current through the reed members exceeds a limit, the reed members disconnect, which is called "drop-out" (DO). The circuit protection device further comprises a surge arrester. The second reed member of the reed member set is connected to the surge arrester in parallel with the reed member set and the load circuit. The first reed member of the reed member set is connected to the load circuit to be protected. The surge arrester has, for example 400 to 550 Volts as the operating voltage. Further, the surge arrester can withstand a 2,500 Ampere current once in the case of a 8/20 µs pulse current flowing therein and to withstand 200 Ampere current twenty times in the case of a 10/200 µs pulse current flowing therein (IEC1000-4-5, VDE0878, C62.41), for example. The example of the surge arrester employed in this embodiment is a metallic oxide (for example, zinc oxide) varistor, a lightning arrester (gas tube arrester), a diode type arrester employing silicon PN junction under voltage control, a thyristor type arrester composed of a silicon PNPN junction under current control, a PTC thermistor type arrester and so on.

EP 1 718 128 A1 discloses an electronic controller for high-power gas discharge lamps, which has a long service life, among others. A first block is the filter circuit. At the instant of switch on, there will be surge voltage occurred on the circuit. A piezoresistor can absorb the transient surge voltage and protects the circuit from transient high voltage impulsion. A second block is the rectifying circuit with a filter capacitor. The electronic controller further comprises three "switching tubes", which actually seem to be MOSFETs, and a current sampling resistance.

It is the object of this invention to provide an intelligent electrical energy management system which has an extend service life.

This object is achieved by the subject matter of the independent claim.

Preferred embodiments of the invention are the subject matters of the dependent claims.

The present invention provides an intelligent electrical energy management system device, which collects the real time data in the neutral line and the phase line of the wire (referring to the neutral line and phase line, also named as the zero line and the live line) of the external power supply, and a singlechip control unit implements data transformation, logical judgement, correlation analysis, output control, and output display, so as to realize the object of automatic control.

An intelligent electrical energy management system device comprises a power supply module, a control module, a memory module, an input module, a clock module, a current detection converting module (converting AC signals into DC signals, hereinafter referred to as current detection module), and an electronic controlled switch; the memory module provided in a memory device is connected to the data terminals of the control module; the input module is connected to the data terminals of the control module; the clock module for providing a real time clock is connected to the data terminals of the control module; the output terminals of the current detection module for detecting the current flowing in electrical equipments is connected to the data terminals of the control module; the control terminal of the electronic controlled switch is connected to the data terminals of the control module; an external power supply supplies power to the electrical equipments via the electronic controlled switch and the current detection module; the input terminals of the power supply module is connected to the external power supply, and the output terminals of the power supply module provides power to each module in the device.

A temperature detection module for detecting the temperature of the input wire of the power supply is also provided in the device; the temperature-sensing element of the temperature detection module clings to the input wire of the power supply; the output terminals of the temperature detection module are connected to the data terminals of the control module; the temperature-sensing element adopts a thermistor.

A current detection converting module (converting AC signals into DC signals, hereinafter referred to as current detection module) for detecting the voltage of the external power supply is also provided in the device; the voltage detection module adopts voltage sensor; the power supply signal collecting terminals of the voltage sensor are respectively connected to the neutral line and the phase line of the external power supply; the signal output terminals of the voltage sensor are connected to the data terminals of the control module.

A display module that is composed of a LED matrix or a liquid crystal display is also provided in the device; the display module is used to display the device information and the operation information, and it is connected to the data terminals of the control module.

A wireless remote control module for receiving the wireless remote control information is also provided in the device; the wireless remote control module is connected to the data terminals of the control module; the remote control module comprises a superheterodyne wireless transmission module for sending and receiving wireless signals, and the superheterodyne wireless transmission module is connected to the data terminals of a singlechip; a memory chip is connected to the data terminals of the singlechip.

A sound direction module composed of a buzzer for prompt or alert is also provided in the device, and the sound direction module is connected to the data terminals of the control module.

A communication module of RS485 protocol for communicating with a computer is also provided in the device, and the communication module is connected to the data terminals of the control module.

A surge current protection module composed of a piezoresistor or a transient voltage suppressor diode (TVS) is also provided in the device, and the surge current protection module is connected to the wire of the external power supply.

The external power supply is provided with a leakage protect device, and the leakage protect device has a closed magnetizer that is fixed to the wire of the external power supply by socket joint; a wire is winded around the magnetizer; one terminal of the wire is connected to the ground, and the other terminal is connected to the base of a triode; the positive electrode of the external power supply is connected to the control terminal of the electronic controlled switch via the triode, and the external power supply supplies power to the electrical equipments via the electronic controlled switch.

The electronic controlled switch can adopt relay, AC contactor, silicon controlled rectifier, photoelectric solid state relay, insulated gate bipolar transistor (IGBT), or Metal-Oxide - Semiconductor Field Effect Transistor (MOSFET).

The advantages of the present invention are that: the present invention has real-time voltage and current detection function, and responses quickly to overcurrent, overload, short circuit, overvoltage, or low voltage, so as to protect the electrical equipments from being damaged and other electrical accidents. The present invention also has a leakage protector with automatic start and detection function, and can do temperature detection to the wire, so as to extend the service life of the wire and avoid fire disaster. An automatic time switch is provided to save the power. The present invention let the user reasonably freely arrange and use electrical equipments, via the function of timing, keyboard, display and wireless remote control. The present invention also has a remote control interface to communicate with a computer, so as to realize remoter operation and control. Moreover, the abovementioned functions can be inquired and displayed in real time, so as to guide the user to use the electrical equipments properly, and is convenient for finding the electricity interruption. The present invention adopts the techniques of microelectronics; the switch part in all the circuit has quick response speed.

The present invention can best be understood from the following detailed description when read with reference to the accompanying figures.
Fig. 1 is a circuit structure diagram of the present invention;
Fig. 2 is a schematic diagram of the main control circuit of the present invention;
Fig. 3 is a schematic diagram of the input and display circuit of the present invention;
Fig. 4 is a schematic diagram of the temperature detection circuit of the present invention;
Fig. 5 is a schematic diagram of the voltage and current detection circuit of the present invention;
Fig. 6 is a flow chart of the software of the present invention.

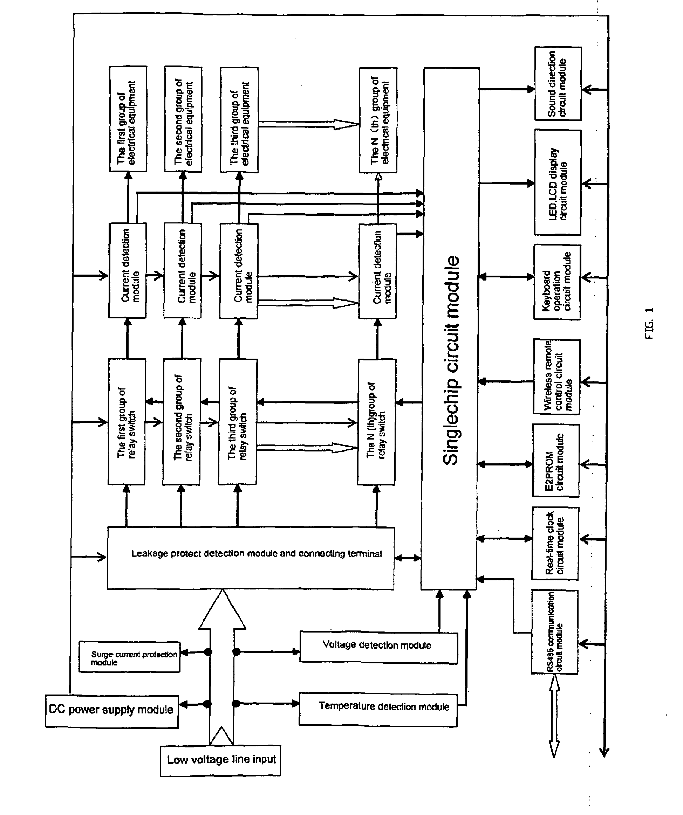

Referring to Fig. 1, the present invention takes the control module as the core, and the control module in the present embodiment adopts a singlechip circuit module. The real-time clock module is connected to the data terminals of the singlechip circuit module via I2C bus to provide accurate real-time clock information to the system, and to provide time information for timing startup and shutdown; the input module is connected to the data terminals of the singlechip circuit module for setting the parameters and so on of the system; the memory module adopts a E2PROM circuit module, and the E2PROM circuit module is connected to the data terminals of the singlechip circuit module via I2C bus; the memory module is used to store various information of the singlechip, and will not lost the data after power off. The control data output terminals of the singlechip circuit module are respectively connected to the control terminal of each group of relay switch, and the external power supply supplies power to the electrical equipments via the relay; the singlechip circuit module can control whether the external power supply supplies power to the corresponding electrical equipments or not by controlling the relay switch to be on or off. A current detection module is provided between the output of the relay and the corresponding electrical equipment, and the current detection module detects the current consumed by the corresponding electrical equipment; the signal output terminals of the current detection module are respectively connected to the data terminals of the singlechip circuit module, so as to achieve the object of overcurrent protection. For displaying the operation steps as configuring the device and for the convenience of operation, the present invention is provided with a display module, and the display module is connected to the data terminals of the singlechip circuit module. The present invention is provided with a sound direction module, and the sound direction module is connected to the data terminals of the singlechip circuit module; the sound direction module adopts a buzzer which is driven to sound by the pulse of corresponding frequency coming from the data terminals of the singlechip circuit module, so that the validity and illegality can be reminded to the user during manual operation or automatic operation of the device, and it also can give an alarm as overload, overvoltage, or overcurrent. A communication module is connected to the data terminals of the singlechip circuit module, and the communication module coverts the signal in the singlechip into a signal of RS485 protocol to communicate with a computer; the present invention can be operated and controlled remotely via a computer, and the invention can also be updated via a computer. For the convenience of operation, a wireless remote control module is connected to the data terminals of the singlechip circuit module, which can be matched to a handheld remote control, so as to operate the present remotely via the remote control. In the present invention, a temperature-sensing element is provided to the wire of the external power supply, and the signal output terminals of a temperature detection module composed mostly of the temperature-sensing element are connected to the data terminals of the singlechip circuit module. In the present invention, the detection input terminals of a voltage detection module are connected to the wire of the external power supply, and the signal output terminals of the voltage detection module are connected to the data terminals of the singlechip circuit module; the voltage detection module is used to detect whether the voltage of the external power supply is stable or not, and is over the rated voltage or not; if the voltage of the external power supply is over the rated voltage, the voltage detection module will send a signal to the singlechip, and the singlechip will control disconnecting the external power supply, so as to avoid damaging the electrical equipments. In the present invention, a surge current protection module is connected to the wire of the external power supply, so as to prevent the electrical equipments from being damaged by high-voltage transient such as lightning stroke.

Aspects of the present invention are further disclosed via the following specific circuits.

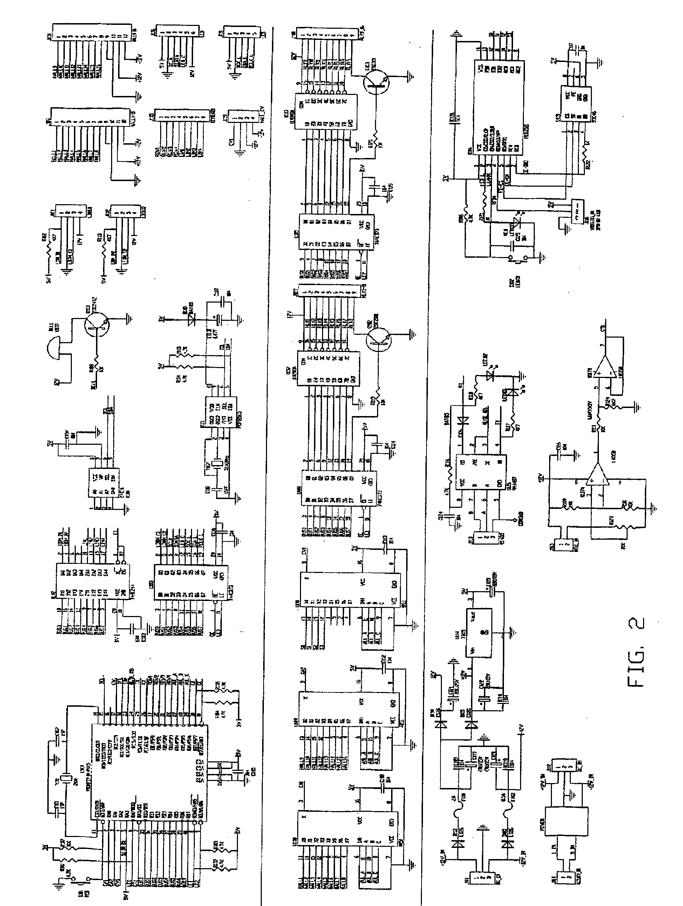

Referring to Fig. 2, the singlechip U101 cooperates with the external capacitor, resistance, and quartz crystal oscillator to form a singlechip minimal system, which is regarded as the singlechip circuit module; in the present embodiment, the singlechip U101 adopts a PIC series singlechip, the type of which is concretely PIC16F77; in concrete application, the singlechip can also be of other series or types. The clock chip U111 and the external crystal oscillator composes the clock module, and the clock module is connected to the SCL pin and SDA pin of the singlechip U101 via I2C bus; in the present embodiment, the clock chip U111 adopts the clock chip PCF8563.In the present embodiment, the memory chip adopts an E2PROM chip U106, and the E2PROM chip U106 concretely adopts the chip AT24C16; the E2PROM chip U106 is connected to the SCL pin and SDA pin of the singlechip U101 via I2C bus, and the SCL pin and SDA pin of the singlechip U101 are multiplex. The data input terminals of the data latch U103, data latch U104, and data latch U105 are respectively connected to the I/O ports RB0-RB7 of the singlechip U101, and the I/O ports RB0-RB7 of the singlechip U101 are time sharing multiplex pins. The enable signal pin of the data latch U103 is connected to the I/O port RA4 of the singlechip U101; the enable signal pin of the data latch U104 is connected to the I/O port RE0 of the singlechip U101; the enable signal pin of the data latch U105 is connected to the I/O port RE1 of the singlechip U101; the gating signal terminals of the data latch U103, data latch U104, and data latch U105 are all connected to the I/O port RE2 of the singlechip U101.The data output terminals of the data latch U104 are connected to the input terminals of the driving chip U112, and the output terminals of the driving chip U112 are connected to the control terminals of the relays of 1-8 channels, so as to drive the relays to work by the driving chip U112; the data output terminals of the data latch U105 are connected to the input terminals of the driving chip U113, and the output terminals of the driving chip U113 are connected to the control terminals of the relays of 9-16 channels, so as to drive the relays to work by the driving chip U113.In the present embodiment, the data latch U103, data latch U104, and data latch U105 all adopt chip 74HC373, and the driving chip U112 and driving chip U113 both adopt chip ULN2003A.The data output terminals of the driving chip U102 are respectively connected to the to the I/O ports RB0-RB7 of the singlechip U101; in the present embodiment, the driving chip U102 adopts chip 74HC244. The data input terminals of the single 8-channel multiplex chip U108 and the single 8-channel multiplex chip U109 are respectively connected to the signal output terminals of the current voltage sensors from HALL_A301 to HALL_A316; the output terminals of the single 8-channel multiplex chip U108 are connected to the I/O port RA0 of the singlechip U101; the output terminals of the single 8-channel multiplex chip U109 are connected to the I/O port RA1 of the singlechip U101; the data select terminals of the single 8-channel multiplex chip U108 and the single 8-channel multiplex chip U109 are respectively connected to the I/O ports RD4, RD5, and RD6 of the singlechip U101; in the present embodiment, the single 8-channel multiplex chip U108 and the single 8-channel multiplex chip U109 both adopt chip 4051.The communication module of the present invention adopts chip U115 of RS485; in the present embodiment, the chip U115 of RS485 adopts chip MAX487; the power terminal VCC and the data transmission terminal DI of the RS485 chip are respectively connected to a LED, so as to show whether the RS485 chip works and sends data normally or not. The present invention adopts the operational amplifier U117A and U117B to compose two stages of amplification, so as to amplify the signal outputted from the thermistor NTC, and then input it to the I/O port RA5 of the singlechip U101.The set value of the temperature can be changed via adjusting the potentiometer R123.In the present embodiment, the operational amplifiers U117A and U117B adopt LM358, and the thermistor NTC adopts RT601.In the present embodiment, the remote control module is composed of a singlechip U116, a memory chip U118, and a superheterodyne wireless transmission module; serial communication is adopted between the memory chip U118 and the singlechip U116; the superheterodyne wireless transmission module is connected to the data terminals of the singlechip U116. A light emitting diode LED103 is connected to the data terminals of the singlechip U116, so as to be used while studying. The buzzer U107 is driven by the triode Q101 to sound, and the base of the triode Q101 is connected to the I/O port RC0 of the singlechip U101.

In the present invention, a power supply of +5V is provided by the voltage stabilization chip U114.

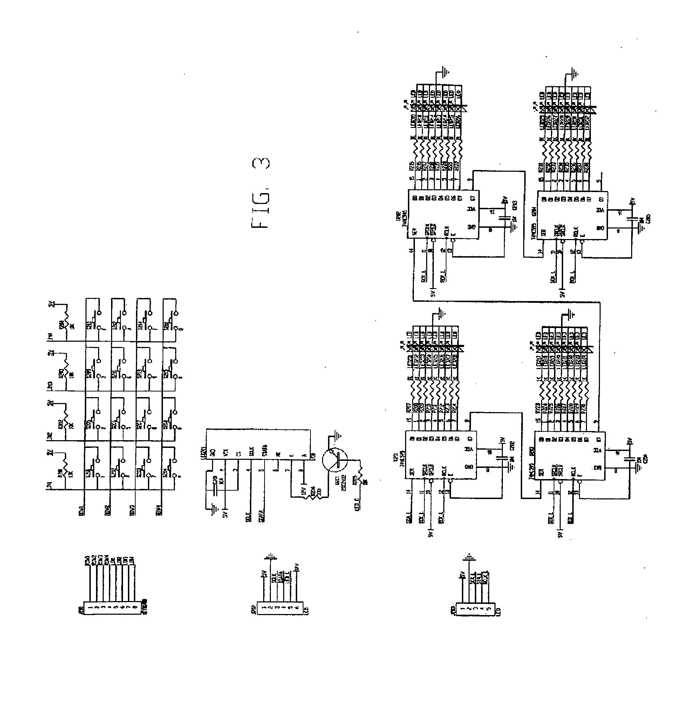

Referring to Fig. 3, it is a schematic diagram of the input and display circuit of the present invention; in the present embodiment, the input keyboard adopts a 4*4 keyboard; the line scan signal output terminals of the keyboard are respectively connected to the singlechip U101 and the I/O ports RD0-RD4 of the singlechip U101; the column scan signal output terminals of the keyboard are respectively connected to the input terminals 2A1-2A4 of the driving chip U102.The display module can be of matrix LED display or LCD display; in the present embodiment, the LCD display adopts liquid crystal driving chip LCD201; the liquid crystal driving chip LCD201 is connected to the output terminals Q2 and Q3 of the data latch U103 via I2C bus, and the display data is transmitted to the liquid crystal driving chip LCD201 to drive the LCD display screen to display. In the present embodiment, the matrix LED display adopts a 4*8 LED to display; the serial data input terminals of the serial/parallel port chip U201 are connected to the output terminal Q5 of the data latch U103 via I2C bus; the serial synchronous signal input terminals of the serial/parallel port chips U201, U202, U203, and U204 are all connected to the output terminal Q6 of the data latch U103; the display array enable signal input terminals of the serial/parallel port chips U201, U202, U203, and U204 are all connected to the output terminal Q7 of the data latch U103; the terminal Q7 of the serial/parallel port chip U201 is connected to the terminal SER of the serial/parallel port chip U202; the terminal Q7 of the serial/parallel port chip U202 is connected to the terminal SER of the serial/parallel port chip U203; the terminal Q7 of the serial/parallel port chip U203 is connected to the terminal SER of the serial/parallel port chip U204; the parallel data output terminals of the serial/parallel port chips U201, U202, U203, and U204 are respectively connected to the corresponding LED; the serial/parallel port chips U201, U202, U203, and U204 drive each LED to be on or off to display corresponding information. In the present embodiment, the serial/parallel port chips U201, U202, U203, and U204 all adopt chip 74HC595.

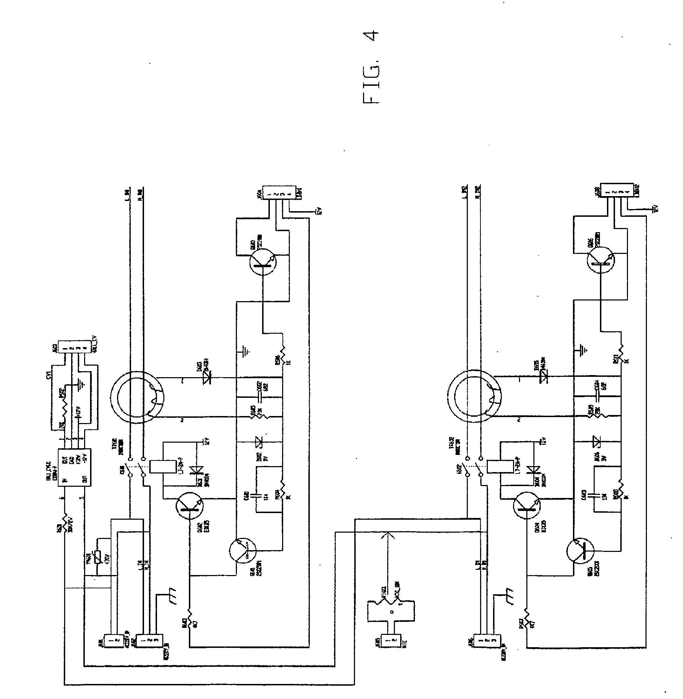

Referring to Fig. 4, the present embodiment adopts two groups of the same configuration, which respectively bears the electric loading in the method of partial load; the wire of the external power supply is provided with a mutual inductor that has a closed magnetizer, and the magnetizer is fixed to the wire of the external power supply by socket joint; a wire is winded around the magnetizer; the output terminal of the wire is connected to the ground, and the other terminal is connected to the base of the triode Q601; the emitter of the triode Q601 is connected to the base of the triode Q602; the emitter of the triode Q602 is connected to the ground, and the collector of the triode Q602 is connected to the control terminal of the relay K601; the external power supply supplies power to the electrical equipments via the relay K601. When leakage occurs in the electrical equipments, the algebraic sum of the current flows into L_IN and N_IN is not zero, so, mutual inductance current appears in the coils of the mutual inductor; after rectified by the diode, the current triggers Q601 to control the base of Q602, and at same times triggers Q603, so that the singlechip controls the base of Q602 to not output high level to switch off the relay K601, and then the main and branch circuits output no voltage, so as to achieve leakage protection. The leakage current is no more than 30 mA, and the circuit is switched off for less than 0.03 S.A piezoresistor YM601 is connected between the neutral line and the phase line of the input wire of the external power supply, so as to prevent the electrical equipments from being damaged by surge voltage such as lightning stroke. The neutral line and the phase line of the input wire of the external power supply are respectively connected to the terminal IN and terminal OUT of the voltage sensor HALL_CV601, and the output terminals of the voltage sensor HALL_CV601 are connected to the I/O port RA2 of the singlechip U101, so as to detect the voltage of the external power supply is normal or not; in the present embodiment, the voltage sensor HALL_CV601 adopts CSIOMA-P.

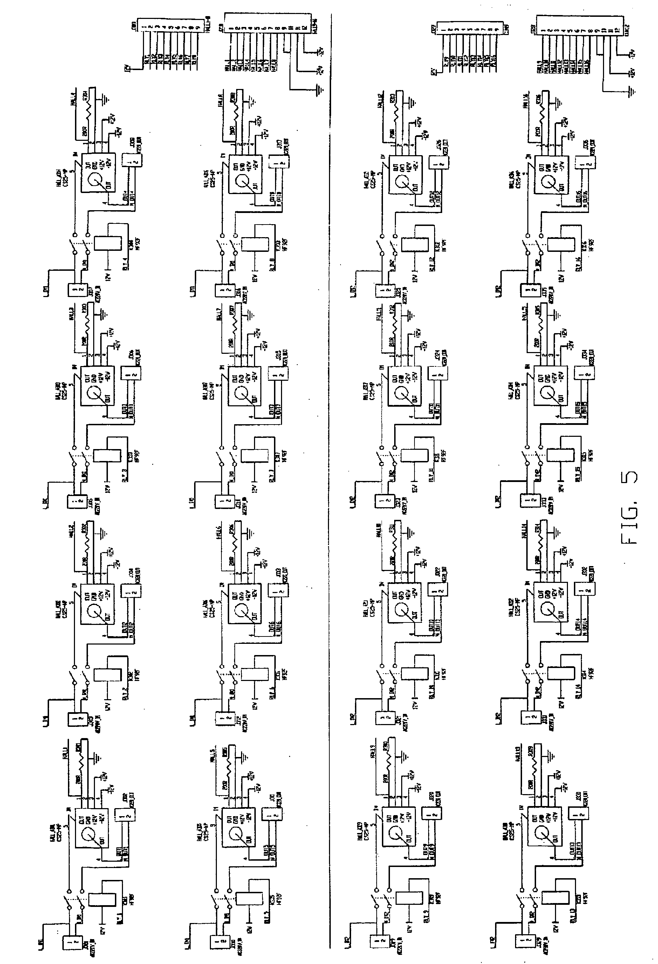

Referring to Fig. 5, the external power supply is input via the relay K301; the neutral line is directly connected to the output terminal of the external power supply, and the phase line outputs into the current voltage sensor HALL_A301; the power supply output of the current voltage sensor HALL_A301 is connected to the output terminal of the external power supply; the signal output terminal of the current voltage sensor HALL_A301 is connected to the input terminal X0 of the single 8-channel multiplex chip U108.In the same way, the connection method of the current voltage sensors from HALL_A302 to HALL_A316 is the same as the current voltage sensor HALL_A301; each channel of current voltage sensor controls the current consumption of one channel of electrical equipment; when short current or overcurrent appears in the electrical equipment, the corresponding current voltage sensor will be switched off to stop supply power to that channel. In the present embodiment, the voltage sensors from HALL_A301 to HALL_A316 all adopt CS25-NP type voltage sensor.

The circuit and implement method provided in the present embodiment all take home power consumption of single-phase for example, but the present invention can also be applied to 380 V industry power consumption of three-phase. if the present invention is applied to 380 V industry power consumption of three-phase, the quantity of the current detection module and the quantity of the input/output connection point of the control module need to be increased, and the type of the voltage sensor and the transient voltage suppressor diode (TVS) need to be changed (so as to match the voltage of 380 V, and each phase line is respectively provided with a corresponding voltage sensor and a transient voltage suppressor diode); wherein, each channel of power supply wire is connected in series with a current detection module and a relay, and the signal output terminal of each current detection module is respectively connected to the data input terminal of one data selector; if the quantity of the data selector is not enough, only the quantity of the data selector needs to be increased, and the data output terminals of each data selector are all connected to one I/O port of the control module. The mutual inductor in the leakage detection module only needs to be connected to the input wire for three-phase power supply simultaneously by socket joint. Because the power consumption of industry is comparatively high, the relay can adopt a high power electronic controlled switch such as an AC contactor, or a high power device such as an AC contactor can be controlled via the linkage of a relay, so as to realize controlling supplying the power.

The present invention is composed of component structures, for example, every module is connected to other module with a connecting plug having the corresponding connection points, which is convenient for increasing the quantity of the detection and process module in the system device; so, the quantity of the nodes in the system can be increased or decreased according to the actual requirement, which increases the flexibility of application.

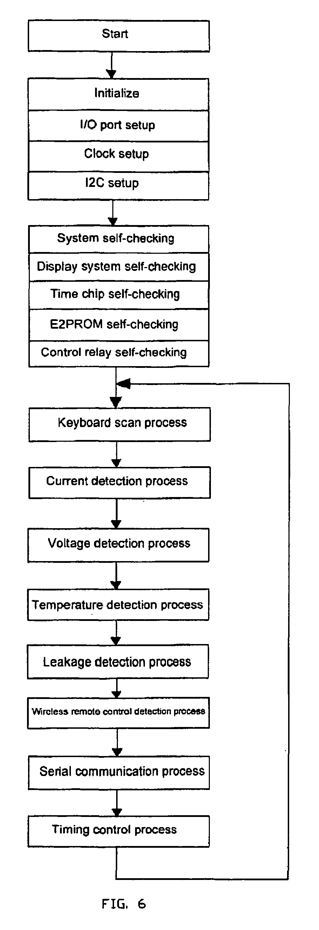

Referring to Fig. 6, while using the present invention, after turning on, first, the system device implements initializing, that is, setting up the I/O ports, setting up the clock, setting up I2C, etc.; second, the system implements self-checking, that is, the self-checking of display system, the self-checking of time chip, the self-checking of E2PROM, controlling the self-checking of the relay; then, after self checking, the system circularly implements keyboard scan process, current detection process, voltage detection process, temperature detection process, leakage detection process, wireless remote control detection process, serial communication process, and timing control process.

The present embodiment provides a preferred implement method, but the present invention also has other embodiments to implement the present invention; for example, the relay can be replaced with AC contactor, silicon controlled rectifier, photoelectric solid state relay, insulated gate bipolar transistor (IGBT), or Metal-Oxide -Semiconductor Field Effect Transistor (MOSFET) ; other communication protocols, such as CAN bus and TCP/IP protocol, can be adopted to realize remote operation and control.

## Claims

1. An intelligent electrical energy management system device, comprising:
a control module;
a memory module provided in a memory device being connected to the data terminals of the control module;
an input module being connected to the data terminals of the control module;
a clock module for providing a real time clock being connected to the data terminals of the control module;
a current detection module; the output terminals of the current detection module for detecting the current flowing in electrical equipments being connected to the data terminals of the control module;
an electronically controlled switch; the control terminal of the electronically controlled switch being connected to the data terminals of the control module;
a power supply module; input terminals of the power supply module for being connected to an external power supply for supplying power to the electrical equipments via the electronically controlled switch and the current detection module, and output terminals of the power supply module providing power to each module in the device
**characterized by**
a temperature detection module for detecting the temperature of an input wire of the power supply;
a temperature-sensing element of the temperature detection module for clinging to the input wire of the power supply; the output terminals of the temperature detection module being connected to the data terminals of the control module;
a surge current protection module composed of a piezoresistor or a transient voltage suppressor diode (TVS); the surge current protection module for being connected to the input wire of the power supply.

2. The intelligent electrical energy management system device of claim 1, wherein the temperature-sensing element adopting a thermistor.

3. The intelligent electrical energy management system device of claim 1 or 2, wherein a current detection module for detecting the voltage of the external power supply is also provided in the device; the voltage detection module adopts voltage sensor; the power supply signal collecting terminals of the voltage sensor are respectively connected to the neutral line and the phase line of the external power supply; the signal output terminals of the voltage sensor are connected to the data terminals of the control module.

4. The intelligent electrical energy management system device of one of claims 1 to 3, wherein a display module that is composed of a LED matrix or a liquid crystal display is also provided in the device; the display module is used to display the device information and the operation information, and it is connected to the data terminals of the control module.

5. The intelligent electrical energy management system device of one of claims 1 to 4, wherein a wireless remote control module for receiving the wireless remote control information is also provided in the device; the wireless remote control module is connected to the data terminals of the control module; the remote control module comprises a superheterodyne wireless transmission module for sending and receiving wireless signals, and the superheterodyne wireless transmission module is connected to the data terminals of a singlechip; a memory chip is connected to the data terminals of the singlechip.

6. The intelligent electrical energy management system device of one of claims 1 to 5, wherein a sound direction module composed of a buzzer for prompt or alert is also provided in the device, and the sound direction module is connected to the data terminals of the control module.

7. The intelligent electrical energy management system device of one of claims 1 to 6, wherein a communication module of RS485 protocol for communicating with a computer is also provided in the device, and the communication module is connected to the data terminals of the control module.

8. The intelligent electrical energy management system device of one of claims 1 to 7, wherein the external power supply is provided with a leakage protect device, and the leakage protect device has a closed magnetizer that is fixed to the wire of the external power supply by socket joint; a wire is winded around the magnetizer; one terminal of the wire is connected to the ground, and the other terminal is connected to the base of a triode; the positive electrode of the external power supply is connected to the control terminal of the electronic controlled switch via the triode, and the external power supply supplies power to the electrical equipments via the electronic controlled switch.

9. The intelligent electrical energy management system device of one of claims 1 to 8, wherein the electronic controlled switch adopts relay, AC contactor, silicon controlled rectifier, photoelectric solid state relay, insulated gate bipolar transistor (IGBT), or Metal-Oxide -Semiconductor Field Effect Transistor (MOSFET).

## Patentansprüche

1. Eine Einrichtung eines intelligenten elektrischen Energieverwaltungssystems mit:
einem Steuermodul;
einem Speichermodul, das in einer Speichereinheit vorgesehen ist, die mit den Datenanschlüssen des Steuermoduls verbunden ist;
einem Eingangsmodul, das mit den Datenanschlüssen des Steuermoduls verbunden ist;
einem Uhrenmodul zum Bereitstellen einer Echtzeituhr, die mit den Datenanschlüssen des Steuermoduls verbunden ist;
einem Stromerfassungsmodul; wobei die Ausgangsanschlüsse des Elektrizitätsanzeigemoduls zum Erfassen des Stroms, der in elektrischen Geräten fließt, mit den Datenanschlüssen des Steuermoduls verbunden sind;
einem elektronisch gesteuerten Schalter; wobei der Steueranschluss des elektronisch gesteuerten Schalters mit den Datenanschlüssen des Steuermoduls verbunden ist;
einem Netzanschlussmodul; wobei Eingangsanschlüsse des Netzanschlussmoduls bestimmt sind, um mit einem externen Netzanschluss verbunden zu werden, zum Versorgen der elektrischen Geräte über den elektronisch gesteuerten Schalter und das Stromerfassungsmodul mit Elektrizität und Ausgangsanschlüsse des Netzanschlussmoduls Strom zu jedem Modul in dem Gerät liefern
**gekennzeichnet durch**
ein Temperaturerfassungsmodul zum Erfassen der Temperatur eines Zugangsdrahts des Netzanschlusses;
ein Temperaturfühlbauteil des Temperaturerfassungsmoduls zum Festklammern an den Zugangsdraht des Netzanschlusses; wobei die Ausgangsanschlüsse des Temperaturerfassungsmoduls mit den Datenanschlüssen des Steuermoduls verbunden sind;
ein Stoßstromschutzmodul, das aus einem Piezowiderstand oder einer Überspannungsschutzdiode (TVS) besteht; wobei das Stoßstromschutzmodul mit dem Zugangsdraht des Netzanschlusses verbunden ist.

2. Einrichtung eines intelligenten elektrischen Energieverwaltungssystems gemäß Anspruch 1, wobei das Temperaturfühlbauteil einen Thermistor einsetzt.

3. Einrichtung eines intelligenten elektrischen Energieverwaltungssystems gemäß Anspruch 1 oder 2, wobei ein Stromerfassungsmodul zum Erfassen der Spannung des externen Netzanschlusses ebenfalls in dem Gerät vorgesehen ist; wobei das Spannungserfassungsmodul einen Spannungssensor einsetzt; wobei die Netzanschlusssignalsammelanschlüsse des Spannungssensors jeweils mit dem Nullleiter und dem Phasenleiter des externen Netzanschlusses verbunden sind; wobei die Signalausgabeanschlüsse des Spannungssensors mit den Datenanschlüssen des Steuermoduls verbunden sind.

4. Einrichtung eines intelligenten elektrischen Energieverwaltungssystems gemäß einem der Ansprüche 1 bis 3, wobei ein Displaymodul, das aus einer LED Matrix oder einem Flüssigkristalldisplay zusammengesetzt ist, in dem Gerät ebenfalls vorgesehen ist; wobei das Displaymodul verwendet wird, um die Geräteinformation und die Betriebsinformation anzuzeigen, und es mit den Datenanschlüssen des Steuermoduls verbunden ist.

5. Einrichtung eines intelligenten elektrischen Energieverwaltungssystems gemäß einem der Ansprüche 1 bis 4, wobei ein drahtloses Fernbedienungsmodul zum Empfangen der drahtlosen Fernbedienungsinformation ebenfalls in dem Gerät vorgesehen ist; wobei das drahtlose Fernbedienungsmodul mit den Datenanschlüssen des Steuermoduls verbunden ist; wobei das Fernbedienungsmodul ein superheterodynes Drahtlosübertragungsmodul zum Senden und Empfangen von drahtlosen Signalen umfasst und das superheterodyne Drahtlosübertragungsmodul mit den Datenanschlüssen eines Einchips verbunden ist; wobei ein Speicherchip mit den Datenanschlüssen des Einchips verbunden ist.

6. Einrichtung eines intelligenten elektrischen Energieverwaltungssystems gemäß einem der Ansprüche 1 bis 5, wobei ein Schallrichtungsmodul, das aus einem Buzzer für Aufforderung oder Alarm besteht, ebenfalls in dem Gerät vorgesehen ist und das Schallrichtungsmodul mit den Datenanschlüssen des Steuermoduls verbunden ist.

7. Einrichtung eines intelligenten elektrischen Energieverwaltungssystems gemäß einem der Ansprüche 1 bis 6, wobei ein Kommunikationsmodul des RS485 Protokolls zur Datenübertragung mit einem Computer ebenfalls in dem Gerät vorgesehen ist und das Kommunikationsmodul mit den Datenanschlüssen des Steuermoduls verbunden ist.

8. Einrichtung eines intelligenten elektrischen Energieverwaltungssystems gemäß einem der Ansprüche 1 bis 7, wobei der externe Netzanschluss mit einer Undichtigkeitsschutzvorrichtung versehen ist und die Undichtigkeitsschutzvorrichtung einen geschlossenen Magnetiseur aufweist, der an dem Draht des externen Netzanschlusses durch eine Steckerverbindung befestigt ist; wobei ein Draht um den Magnetiseur gewickelt ist; wobei ein Anschluss des Drahts mit Masse verbunden ist und der andere Anschluss mit der Basis einer Triode verbunden ist; wobei die positive Elektrode des externen Netzanschlusses mit dem Steueranschluss des elektronisch gesteuerten Schalters über die Triode verbunden ist und der externe Netzanschluss Strom zu den elektrischen Geräten über den elektronisch gesteuerten Schalter liefert.

9. Einrichtung eines intelligenten elektrischen Energieverwaltungssystems gemäß einem der Ansprüche 1 bis 8, wobei der elektronisch gesteuerte Schalter ein Relais, einen Wechselstromschalter, einen siliziumgesteuerten Gleichrichter, ein fotoelektrisches Halbleiterrelais, einen bipolaren Transistor mit isolierter Gate-Elektrode (IGBT) oder einen Metall-Oxid-Halbleiter-Feldeffekttransistor (MOSFET) einsetzt.

## Revendications

1. Dispositif à système intelligent de gestion de l'énergie électrique, comprenant:
un module de commande;
un module de mémoire prévu dans un dispositif de mémoire connecté aux terminaux de données du module de commande;
un module d'entrée connecté aux terminaux de données du module de commande;
un module d'horloge servant à fournir une horloge en temps réel connectée aux terminaux de données du module de commande;
un module de détection de courant ; les bornes de sortie du module de détection de courant servant à détecter le courant circulant dans les équipements électriques connectés aux terminaux de données du module de commande;
un commutateur à commande électronique ; le terminal de commande du commutateur à commande électronique étant connecté aux terminaux de données du module de commande;
un module d'alimentation électrique; les bornes d'entrée du module d'alimentation électrique pouvant être connectées à une alimentation électrique externe pour alimenter en courant les équipements électriques via le commutateur à commande électronique et le module de détection de courant et les bornes de sortie du module d'alimentation électrique alimentant en courant chaque module dans le dispositif;
**caractérisé par**:
un module de détection de température servant à détecter la température d'un câble d'entrée de l'alimentation électrique;
un élément de détection de température du module de détection de température à accrocher au câble d'entrée de l'alimentation électrique; les bornes de sortie du module de détection de température étant connectées aux terminaux de données du module de commande;
un module de protection contre le courant de surcharge composé d'une résistance piézoélectrique ou d'une diode de suppression de tension transitoire (TVS); le module de protection contre le courant de surcharge pouvant être connecté au câble d'entrée de l'alimentation électrique.

2. Dispositif à système intelligent de gestion de l'énergie électrique selon la revendication 1, dans lequel l'élément de détection de température adopte une thermistance.

3. Dispositif à système intelligent de gestion de l'énergie électrique selon la revendication 1 ou 2, dans lequel un module de détection de courant servant à détecter la tension de l'alimentation électrique externe est également prévu dans le dispositif; le module de détection de tension adopte un capteur de tension; les bornes de collecte de signal d'alimentation électrique du capteur de tension sont respectivement connectées à la ligne neutre et à la ligne de phase de l'alimentation électrique externe; les bornes de sortie de signal du capteur de tension sont connectées aux terminaux de données du module de commande.

4. Dispositif à système intelligent de gestion de l'énergie électrique selon l'une quelconque des revendications 1 à 3, dans lequel un module d'affichage composé d'une matrice à DEL ou d'un écran à cristaux liquides est également prévu dans le dispositif; le module d'affichage est utilisé pour afficher les informations de dispositif et les informations de fonctionnement et il est connecté aux terminaux de données du module de commande.

5. Dispositif à système intelligent de gestion de l'énergie électrique selon l'une quelconque des revendications 1 à 4, dans lequel un module de télécommande sans fil servant à recevoir les informations de télécommande sans fil est également prévu dans le dispositif; le module de télécommande sans fil est connecté aux terminaux de données du module de commande; le module de télécommande comprend un module de transmission sans fil superhétérodyne servant à émettre et recevoir des signaux sans fil et le module de transmission sans fil superhétérodyne étant connecté aux terminaux de données d'une puce unique ; une puce à mémoire étant connectée aux terminaux de données de la puce unique.

6. Dispositif à système intelligent de gestion de l'énergie électrique selon l'une quelconque des revendications 1 à 5, dans lequel un module de direction du son composé d'un bruiteur servant faire réagir ou alerter est également prévu dans le dispositif et dans lequel le module de direction du son est connecté aux terminaux de données du module de commande.

7. Dispositif à système intelligent de gestion de l'énergie électrique selon l'une quelconque des revendications 1 à 6, dans lequel un module de communication de protocole RS485 servant à communiquer avec un ordinateur est également prévu dans le dispositif et dans lequel le module de communication est connecté aux terminaux de données du module de commande.

8. Dispositif à système intelligent de gestion de l'énergie électrique selon l'une quelconque des revendications 1 à 7, dans lequel l'alimentation électrique externe est pourvue d'un dispositif de protection contre les fuites et dans lequel le dispositif de protection contre les fuites a un système d'aimantation fermé fixé au câble de l'alimentation électrique externe par un raccord manchonné; un câble est enroulé autour du système d'aimantation ; une borne du câble est connectée à la masse et l'autre borne est connectée à la base d'un triode ; l'électrode positive de l'alimentation électrique externe est connectée au terminal de commande du commutateur à commande électronique via le triode et l'alimentation électrique externe alimente en courant les équipements électriques via le commutateur à commande électronique.

9. Dispositif à système intelligent de gestion de l'énergie électrique selon l'une quelconque des revendications 1 à 8, dans lequel le commutateur à commande électronique adopte un relais, un contacteur CA, un redresseur à commande de silicium, un relais à état solide photoélectrique, un transistor bipolaire à grille isolée (IGBT) ou un transistor à effet de champ à métal-oxyde-semi-conducteur (MOSFET).
